# EUROPEAN PATENT SPECIFICATION

(11) **EP 2 658 292 B1**
(45) Date of publication and mention of the grant of the patent: **14.01.2015**
(21) Application number: 12165930.4
(22) Date of filing: 27.04.2012
(51) Int. Cl.: H04W 4/02, H04W 4/00

(54) **Method and apparatus to detect interaction between devices**
Verfahren und Vorrichtung zur Erkennung der Interaktion zwischen Vorrichtungen
Procédé et appareil pour détecter une interaction entre des dispositifs

(43) Date of publication of application: 30.10.2013
(73) Proprietor: NTT DOCOMO, INC., Chiyoda-ku Tokyo (JP)
(72) Inventor: Holleis, Paul, 81929 Munich (DE); Marth, Michael, 80796 Munich (DE)
(74) Representative: Betten & Resch

(56) References cited:
- EP-A1- 2 337 323
- US-A1- 2011 070 828
- "MagiTact: interaction with mobile devices based on compass (magnetic) sensor" In: HAMED KETABDAR; KAMER ALI YÜKSEI; MEHRAN ROSHANDEL: "Proceedings of the 15th international conference on Intelligent user interfaces (IUI '10", 2010, ACM, XP002685703, * abstract * * pages 1,2 *

## Description

### FIELD OF INVENTION

This invention relates to the interaction between two (or more) devices such mobile devices like mobile phones or computers.

### BACKGROUND OF THE INVENTION

Current phones are unable to detect whether they are close to each other (other than using very coarse positioning methods such as GPS) or systems that need special infrastructures such as ultrasonic positioning systems.

When two people want to share data using their mobile terminals or want to present data on both of them at the same time, they need to first detect and authenticate each other's device. Many methods can easily be disturbed or attacked by others. Furthermore, the relative position between two devices is not known by the devices. This means that applications such as combining two mobile phone screens rely on the users to adjust the relative position to the one required by the application. Furthermore, detecting gestures between mobile devices cannot be detected by methods such as NFC.

Detecting by one device that another one is in close proximity can hardly be achieved without infrastructure or user input. Near Field Communication (e.g. using RFID) can only detect collocation of the phones if both are equipped with specific readers / writers and are handled very specifically (e.g. the sensitive areas must match). Gestures cannot be detected at all by such a mechanism.

For connecting two phones, there exist various ways, e.g.:
Start a Bluetooth connection by: enabling Bluetooth on both devices + making at least one device discoverable + initiating a search for devices + identifying and
selecting the other device from a list + entering a password + telling the other person the password + waiting for and reacting to the notification on the other phone + entering the password

Use NFC/FeliCa to initiate a connection by: enabling NFC writer capability on at least one phone + holding the NFC sensors together (most of the time the back of the phone) + waiting for an additional data transfer connection to be established (e.g. Bluetooth)

Use specific applications (if the two phones are both connected to the same network / using the same service) by: starting the same application on both phones + entering the same (e.g. randomly generated or manually thought out) code into both applications + waiting for an additional data transfer connection to be established (e.g. Bluetooth) or registering at a common server in the network

The step of entering the code in the previous method can be replaced by any action that can help in detecting the connection between the two devices, see for example the Hoccer system (using gesture detection: one person "throws" the phone, the other "catches" it)

All these and similar approaches have in common a set of problems:

They need specific, not very common hardware: both devices need, e.g., a Bluetooth or an NFC reader/writer chip

They need several steps of user interaction: users need to switch on the respective type of sensor (to active mode) or start applications + enter corresponding information on both phones

Often additional information needs to be passed orally: common passcodes / Bluetooth names, etc. need to be spoken or otherwise transmitted to the other party which involves the risk that it can be exploited by other persons nearby

It would therefore be desirable to have an interaction method which could avoid or at least limit these problems.

Furthermore, none of the prior art approaches are able to detect the relative position of the two devices or gestures between those two.

Regarding magnetic field interaction, some of the few systems that have used this for interaction purposes are MagiTact system (see e.g. Hamed Ketabdar, Kamer Ali Yüksel, and Mehran Roshandel. 2010. MagiTact: interaction with mobile devices based on compass (magnetic) sensor. In Proceedings of the 15th international conference on Intelligent user interfaces (IUI '10). ACM, New York, NY, USA, 413-414. DOI=10.1145/1719970.1720048 http://doi.acm.org/10.1145/1719970.1720048), and a demonstration system from NTT Docomo (see e.g. "DoCoMo Touchable 3D is as crazy as it sounds": http://www.pocket-lint.com/news/38594/ docomo-touchable-3d-concept-screen).

The MagiTact system uses a permanent magnet on the finger of a user to allow the detection of gestures in front of a specific mobile phone model. The demonstration system from Docomo uses a metal pen tip and an electromagnet in order to create haptic feedback (the pen can be pushed away from a display when the magnet installed behind the display is powered). The first approach needs to augment the user's hand, the second needs specific equipment in order to work).

The document US 2011/070828 A1 describes a Near Field Communications (NFC) tag including a housing and a magnet carried by the housing and configured to be magnetically sensed by a magnetic sensor carried by a communications device to activate an NFC circuit within the communications device to communicate using an NFC communications protocol.

### SUMMARY OF THE INVENTION

The present invention is defined in the independent claims. The dependent claims define embodiments of the invention.

By sensing the magnetic field and evaluating it estimating the type and/or position and/or orientation of the device becomes possible.

According to one embodiment said device comprises one of the following:
A second mobile phone;
a computer;
a cradle for said apparatus.

These are implementation of devices for which the evaluation processing based on the sensed of the magnetic field is particularly useful.

According to one embodiment the apparatus comprises one or more of the following:

Said processing module being adapted to compare said sensed magnetic field strength or and/or its pattern with previously stored magnetic field strengths and/or its patterns.

By comparing the magnetic field with previously stored patterns it becomes possible to use knowledge about the characteristics of the magnetic field of various mobile devices to detect their type, position, orientation, etcetera.

According to one embodiment said known field strengths or patterns based on which said processing module is adapted to perform said evaluation are one or more of the following:
the field strengths or patterns caused by the one or more speakers and/or any other elements or modules of said device comprising a permanent magnet;
the field strengths or patterns caused by the built-in electronics and or the flow of current of said device,
said field strengths or patterns being characteristic for the type and/or the relative position and/or the orientation of said device with respect to said mobile device.

These are examples of the evaluation of the types of magnetic fields and their characteristics which are sensed and evaluated.

According to one embodiment said processing module is adapted to use for said comparison one or more of
a classification algorithm;
a matching algorithm.

These are suitable examples of implementations of the processing module for evaluating the magnetic field.

According to one embodiment the apparatus comprises:

A module for performing a pairing between said apparatus and said device based on the detected type or model of said device.

In this way the pairing process between two mobile devices can be significantly simplified.

According to one embodiment the apparatus comprises:

A module for reporting the detected type or model of said device to a server to enable said server to detect whether and/or how a pairing between said apparatus and said device can be performed;
informing said apparatus by said server about the result of said detection to thereby initiate a pairing.

This is a specifically suitable example for implementing a pairing process,

According to one embodiment the apparatus comprises:

A module for detecting a gesture based on the sensed magnetic field strength and/or its pattern.

According to this embodiment a specific movement (gesture) of a device can be sensed and recognized to use it e.g. as a trigger for a specific function or input.

According to one embodiment the apparatus comprises:

A module for based on the detected type and/or the relative position of said apparatus and said device, controlling the displays of said apparatus and said device such that they are used in combination such that each of them displays a part of the total information to be displayed by an application.

In this way the conventional display can be enhanced by combining the display of two devices.

According to one embodiment said use in combination comprises one or more of the following:
Generating a panorama view by combining said two displays;
Using one of said displays for displaying buttons and/or other input interfaces of an application and using the other display to display other information outputted by said application.

These are particularly suitable examples for the implementation of functions based on combining two displays.

According to one embodiment the apparatus comprises:

A module for switching on the NFC functionality of said apparatus in response to the detection of the type or model of said device being capable to communicate with said apparatus.

In this way the energy consumption of a mobile device can be reduced.

According to one embodiment said device comprises a controllable magnet adapted to generate a defined magnetic field pattern such that the evaluation of said magnetic field pattern can be used for the estimation performed by the processing module of said apparatus.

According to one embodiment there is provided a method for detecting by an apparatus being a mobile phone or a computer the location and/or one or more properties of a device, said method comprising:
Sensing and storing by a magnetic sensor the magnetic field strength or and/or its pattern caused by device coming into proximity of said magnetic sensor;
evaluating the sensed magnetic field strength or pattern based on known field strengths or patterns in order to obtain an estimate of one or more of the following: the type of said second mobile phone or computer;
the position and/or orientation of said device with respect to said mobile phone or computer.

This is an implementation of a method for a new approach to enable device interaction.

According to one embodiment the method further comprises the steps as carried out by the modules defined in one of the embodiments of the invention.

According to one embodiment there is provided a computer program comprising computer program code which when being executed on a computer enables said computer to carry out a method according to one of the embodiments of the invention.

### DESCRIPTION OF THE DRAWINGS

Fig. 1 schematically illustrates a pattern measured by a magnetometer.
Fig. 2 schematically illustrates an embodiment for pairing two devices according to an embodiment of the invention.
Fig. 3 schematically illustrates an interaction according to an embodiment of the invention.
Fig. 4 schematically illustrates an interaction according to a further embodiment of the invention.
Fig. 5 schematically illustrates an interaction according to a further embodiment of the invention.

### DETAILED DESCRIPTION

According to one embodiment there is provided a method for enabling interaction between two devices (e.g. computers or mobile phones) which uses magnetic field sensors. This can be applied to most current mobile device models which have such a sensor (e.g. a "compass") already built in.

According to one embodiment a (first) mobile phone has a magnetic sensor for sensing and storing the magnetic field strength and/or its pattern caused by a second mobile phone (or a computer) coming into proximity of said magnetic sensor. When the second mobile phone comes close to the first mobile phone, then the magnetic elements built into it (e.g. the magnet of the speaker) and/or the electric current flowing inside it cause a magnetic field strength which is sensed by the first mobile phone. The magnetic field strength or its pattern is stored in the first mobile phone, and its strength or its pattern may be characteristic for the second mobile phone. The term "pattern" here e.g. refers to the how the magnetic field strength changes or evolves over time, and it may refer to both the amplitude and the shape of the field strength as it is changing over time.

To evaluate the thus generated magnetic field the first mobile phone comprises a processing module for evaluating the sensed magnetic field strength or pattern based on known field strengths or patterns. By evaluating the field strength or pattern based on known field strengths or patterns (e.g. by comparing the detected field strength or pattern with previously stored ones to identify which of the previously stored ones is most similar to the just detected one) there may be obtained e.g. an estimate of the type of said second mobile phone or computer. The previously stored field strengths or patterns may for that purpose be associated with respective mobile phone types, and by indentifying the most similar previously stored field strength or pattern the corresponding type of mobile phone can be determined. In this way the detected magnetic field can be used to detect the type of the second mobile phone (i.e. to obtain an "estimate" for the type of the second mobile phone.

Alternatively or additionally the evaluation of the measured field strength and/or pattern can be performed in order to obtain an estimate of the position and/or the orientation of said second mobile phone with respect to the first mobile phone. The detected field strength or pattern (or both) may be characteristic for the position and/or the orientation of the second mobile phone with respect to the first mobile phone, and by evaluating the detected field strength and its pattern, the position and/or the orientation of the second mobile phone may be determined.

The data from the magnetic field sensor according to one embodiment can therefore be used for several purposes, e.g. to detect the device type, to detect whether one device is close to another device and possibly also their respective orientation. According to one embodiment, in addition to the detection of the proximity and/or orientation, the model of the other device can be detected. Furthermore, under certain conditions, the relative location between the two devices can be detected. According to one embodiment the thus detected information can be used for purposes such as interaction (e.g. gestures) or visualization.

Now further embodiments will be described in somewhat more detail.

The magnetic field sensor built into most current mobile phones ("compass") is used to sense proximity and position of another device in close proximity.

The basic approach builds on 2 aspects:

Most devices generate a magnetic field, either because of built-in electronics and flow of current, or because of built-in magnets such as found in loudspeakers. In close proximity, this field is larger than the earth's magnetic field.

The created magnetic field (its strength and/or its pattern) differs from one device type / model to the next and its proximate relative position can be detected in real-time using the magnetic field sensor and an evaluation unit which evaluates the sensed magnetic field.

More precisely, the setup according to one embodiment is as follows: the magnetic field sensor(s) of the device(s) is (are) queried for their measurements.

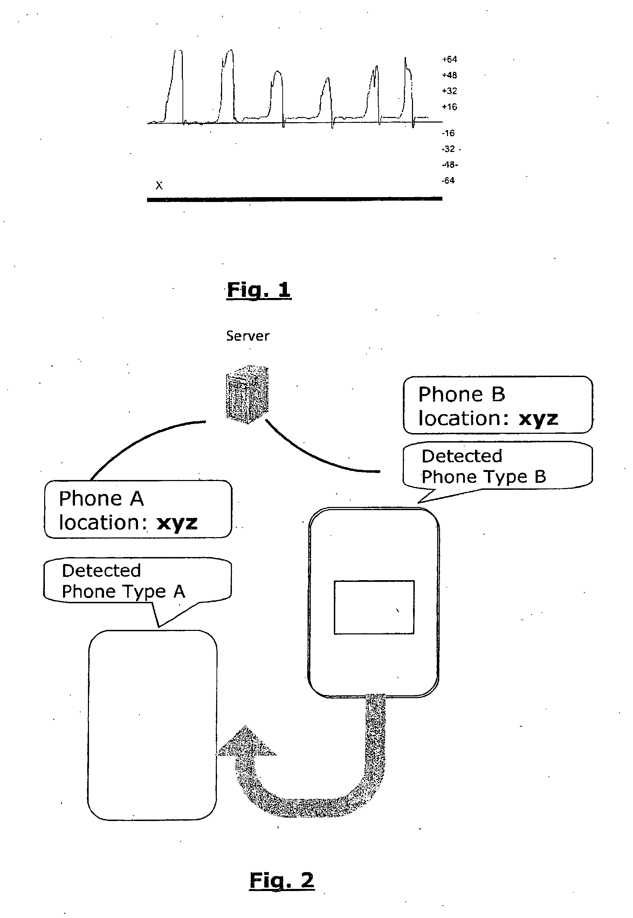

Potentially, a calibration phase whenever the phone is in a steady position can be done to ease this process. Either continuously or whenever a change that is larger than a given threshold is detected, the currently measured values are compared to a database of values previously measured. An exemplary measurement of the magnetic field sensed by the field sensor is shown in Fig. 1. The database has been populated with the specific values measured while placing respective devices B₁, ... Bₙ close to device A. The detection and identification process then matches against these measurements, e.g. by means of a clustering algorithm or other established matching algorithms relying for example on metrics such as nearest neighbourhood etc. Based thereon there is then determined an estimate for the model or type of the second device, and/or its position and/or its orientation.

According to one embodiment, whenever a device Bᵢ is detected, this is reported to the application / device platform. In the case that the two devices are connected to the same backend server and both have the (same) detection method installed and running, the server can receive both classifications and match them with the description of the actual devices. Whenever these details match, the devices can be informed of a successful pairing.

The proposed approach has the following three main advantages:

The method can detect (models of) devices in the immediate neighborhood without any additional sensors (assuming a magnetic field sensor ("compass") is already built into the device). Furthermore, since the magnetic fields generated by different (types / models of) devices mostly are different, they can be detected using an approach such as clustering. The only additional element which is required is an evaluation unit for comparing the measured magnetic field with previously stored values or patterns. This can be implemented by suitably programming microprocessor of the device such that it performs this function.

The method can detect the relative location of two close devices without any additional sensors (provided a magnetic field sensor ("compass") is already built into the device). This can be used to detect gestures, i.e. continuous movements of one device with respect to the other.

The method can provide an easy, intuitive, and secure way of pairing (i.e. initiating a connection between) two devices. This uses location and time as additional parameters.

In addition, it is sometimes not even necessary to directly connect two devices as it may already be enough to know the type of the device or the model. For example an application that only supports two or more Android-based phones could notify the user in case of trying to connect an iPhone before any connections have been made

Now some even further embodiments will be described.

According to one embodiment the approach the magnetic field sensor ("compass") of the devices is read continuously or on detection of a specific change (e.g. measured using a low sampling rate or by using other sensors such as an accelerometer). The approach has four possible uses:

Close device detection: the device polls the magnetic field sensor and compares the values against a table of previously sampled data (using some thresholds or clustering algorithm). If a match is found, the matched device type / model is reported by the system and can then further be processed by any application.

Pairing initiation: This is schematically illustrated in Fig. 2. Two devices poll their magnetic field sensors as above. Both devices report to a common server when they find a match. In one embodiment they also transmit a measure of their current location and a timestamp of the detection. The server can then decide based on this data when the two devices have been brought into close proximity and report that back to the devices. These can then initiate a connection either through the common server or some other means such as Bluetooth (without requiring the normally involved pairing process).

Relative position determination: the device polls the magnetic field sensor as above. If another device has been found, the currently detected values are compared against a database of position values for this device (using some thresholds or clustering algorithm). By matching these, the current relative position of the devices can be reported. The accuracy can be increased when the two devices use this method at the same time.

Gesture interaction: building on the methods above, the continuous sensing of the relative position of two devices can be used to detect gestures, i.e. continuous movements according to a specific path.

Thus, detecting a close device and determining its relative position can be done even if only one device has a magnetic field sensor and does not need any additional connections.

Connecting the devices in a secure way according to one embodiment needs an additional measurement of the devices' location and the sending of this information to a common server.

As described before the evaluation of the sensed magnetic field is based on the known field strengths or patterns which are caused by the one or more speakers and/or any other elements or modules of said second mobile phone or computer comprising a permanent magnet. Alternatively or additionally they may be caused by the built-in electronics and or the flow of current of the second mobile phone. The previously stored field strength or pattern is characteristic for the type and/or the relative position and/or the orientation of said second mobile phone with respect to the first mobile device and may therefore be used for the evaluation.

Now some further more specific embodiments will be described.

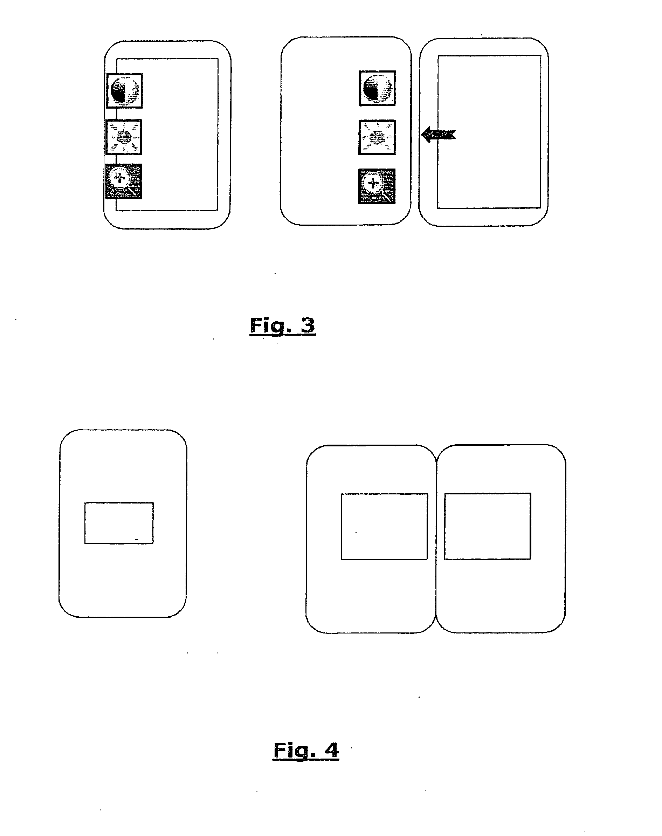

According to one embodiment the detection of the relative position of the devices is used for combining the screens of the two devices such that what originally is displayed on one screen is split up into two parts, one being then displayed on the screen of the first device and the other being displayed on the second device. This is particularly useful if the screen of one device is s not large enough to display all necessary information. For example, some buttons of a user interface may be too small to be displayed or may be (partly) occluded. This case is exemplarily and schematically displayed in Fig. 3, showing one screen with buttons on the left-hand side. By detecting the proximity of a second device and its relative position, the screens of both can be used in combination such that the buttons are displayed on the left-hand side and the arrow showing the selection being displayed on the right-hand side. Moreover, by continuously detecting the relative position the selection of the menu item can even be changed through a gesture by moving the right-hand device and thereby moving the arrow, the movement being detected and being recognized as a change of the selection.

Another embodiment is schematically illustrated in Fig. 4. the left-hand side shows a mobile phone which displays a panoramic image. By using two mobile phones in a way as shown on the right-hand side the panoramic image by be displayed by using the two screens in a combined manner. In this way an enlarged version of the image can be displayed by combining the two screens.

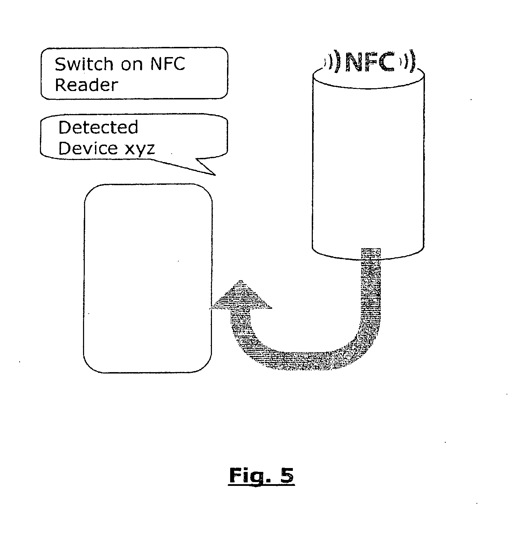

An even further embodiment is now described in connection with Fig. 5. this embodiment relates to an approach which can reduce the energy consumption of NFC devices.

In the prior art, for an NFC interaction the NFC device has to be switched on, and the switched on device then consumes about 15 mA, even if no other device is in close proximity and no interaction can be performed. However, to enable the detection of other devices, the NFC device has to be constantly switched on.

According to one embodiment the function of the detection of another NFC device is performed by the evaluation of the magnetic field sensed by the magnetometer. The magnetic field evaluation is used to detect the (proximity of) the other NFC device in a way described in connection with the previous embodiments, and then in response to the detection of the second device the NFC reader of the first device is switched on. Since the magnetometer consumes only 0,3 mA compared to the 15 mA of the NFC reader, this approach can reduce the energy consumption.

According to a further embodiment the device which comes into proximity of the magnetic sensor of the apparatus can be any device which causes a magnetic field which can be evaluated such that the type and/or location and/or orientation of the device can be determined.

According to one embodiment the device is a cradle tor the mobile phone, e.g. a cradle for a car or for being used at home. The cradle according to one embodiment may comprise a permanent magnet. Based on the strength and location of the permanent magnet the mobile phone may then evaluate the generated and sensed magnetic field to identify the type of the cradle, possibly to adapt its communication method in a suitable manner to enable communication with the cradle.

According to a further embodiment the cradle (or any device) may comprise a controllable magnet, e.g. an electro magnet, which is controllable such that it generates a defined magnetic field pattern. This defined pattern can then be evaluated can be used to identify the type and/or location and/or orientation of the device. In this manner the number of types which can be identified can be larger than because the pattern can be more characteristic as if it just depends on the location of a permanent magnet.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a computer or a mobile device such as a mobile phone, a smartphone, a PDA, or anything alike.

## Claims

1. An apparatus being a mobile phone or computer comprising
A magnetic sensor adapted to sense and store the magnetic field strength and/or its pattern caused by a device coming into proximity of said magnetic sensor;
a processing module adapted to evaluate the sensed magnetic field strength or pattern based on known field strengths or patterns in order to obtain an estimate of one or more of the following:
the type of said device;
the orientation of said device with respect to said mobile phone or computer,
wherein said processing module is adapted to compare said sensed magnetic field strength and/or its pattern with previously stored magnetic field strengths and/or its patterns of said device.

2. The apparatus of claim 1, wherein said device comprises one of the following:
A second mobile phone or mobile device;
a computer;
a cradle for said apparatus.

3. The apparatus of one of the preceding claims, wherein
said known field strengths or patterns based on which said processing module is adapted to perform said evaluation are one or more of the following:
the field strengths or patterns caused by the one or more speakers and/or any other elements or modules of said device comprising a permanent magnet;
the field strengths or patterns caused by the built-in electronics and or the flow of current of said device,
said field strengths or patterns being characteristic for the type and/or the relative position and/or the orientation of said device with respect to said mobile device.

4. The apparatus of one of the preceding claims, wherein said processing module is adapted to use for said comparison one or more of
A classification algorithm;
A matching algorithm.

5. The apparatus according to one of the preceding claims, comprising:
A module for performing a pairing between said apparatus and said device based on the detected type or model of said device.

6. The apparatus of claim 5, comprising:
A module for reporting the detected type or model of said device to a server to enable said server to detect whether and/or how a pairing between said apparatus and said device can be performed;
informing said apparatus by said server about the result of said detection to thereby initiate a pairing.

7. The apparatus according to one of the preceding claims, comprising:
A module for detecting a gesture based on the sensed magnetic field strength and/or its pattern.

8. The apparatus according to one of the preceding claims, comprising:
A module for based on the detected type and/or the relative position of said apparatus and said device, controlling the displays of said apparatus and said device such that they are used in combination such that each of them displays a part of the total information to be displayed by an application.

9. The apparatus of claim 8, wherein said use in combination comprises one or more of the following:
Generating a panorama view by combining said two displays;
Using one of said displays for displaying buttons and/or other input interfaces of an application and using the other display to display other information outputted by said application.

10. The apparatus according to one of the preceding claims, comprising:
A module for switching on a NFC functionality of said apparatus in response to the detection of the type or model of said device being capable to communicate with said apparatus.

11. The apparatus according to one of the preceding claims, wherein
said device comprises a controllable magnet adapted to generate a defined magnetic field pattern such that the evaluation of said magnetic field pattern can be used for the estimation performed by the processing module of said apparatus.

12. A method for detecting by an apparatus being a mobile phone or a computer the location and/or one or more properties of device, said method comprising:
Sensing and storing by a magnetic sensor the magnetic field strength or and/or its pattern caused by said device coming into proximity of said magnetic sensor;
evaluating the sensed magnetic field strength or pattern based on known field strengths or patterns in order to obtain an estimate of one or more of the following:
the type of said device;
the orientation of said device with respect to said mobile phone or computer,
comparing said sensed magnetic field strength and/or its pattern with previously stored magnetic field strengths and/or its patterns of the device.

13. The method of claim 12, further comprising the steps as carried out by the modules defined in one of claims 2 to 11.

14. A computer program comprising computer program code which, when being executed on a computer, enables said computer to carry out a method according to one of claims 12 to 13.

## Patentansprüche

1. Eine Vorrichtung, die ein Mobiltelefon oder ein Computer ist, aufweisend:
Einen magnetischen Sensor, der angepasst ist, die magnetische Feldstärke und/oder ihr Muster zu erfassen und zu speichern, die und/oder das durch ein Gerät verursacht wird, das in die Nähe des magnetischen Sensors kommt;
ein Verarbeitungsmodul, das angepasst ist, die erfasste magnetische Feldstärke oder das Muster basierend auf bekannten Feldstärken oder Mustern zu evaluieren, um eine Abschätzung von einem oder mehreren der Folgenden zu erhalten:
Der Typ der Geräts;
die Orientierung des Geräts bezüglich des Mobiltelefons oder Computers,
wobei das Verarbeitungsmodul angepasst ist, die erfasste magnetische Feldstärke und/oder ihr Muster mit vorher gespeicherten magnetischen Feldstärken und/oder ihren Mustern des Geräts zu vergleichen.

2. Die Vorrichtung nach Anspruch 1, wobei das Gerät eines der Folgenden aufweist:
Ein zweites Mobiltelefon oder Mobilgerät;
einen Computer;
eine Halterung für die Vorrichtung.

3. Die Vorrichtung nach einem der vorhergehenden Ansprüche, wobei
die bekannten Feldstärken oder Muster, basierend auf denen das Verarbeitungsmodul angepasst ist, die Evaluierung durchzuführen, eines oder mehrere der Folgenden sind:
Die Feldstärken oder Muster, die verursacht werden durch einen oder mehrere Lautsprecher und/oder andere Elemente oder Module des Geräts, die einen Permanentmagneten aufweisen;
die Feldstärken oder Muster, die verursacht werden durch eingebaute Elektronik und/oder den Fluss des Stroms des Geräts,
wobei die Feldstärken oder Muster charakteristisch sind für den Typ und/oder die Relativposition und/oder die Orientierung des Geräts bezüglich des Mobilgeräts.

4. Die Vorrichtung nach einem der vorhergehenden Ansprüche, wobei das Verarbeitungsmodul angepasst ist, für den Vergleich eines oder mehrere zu verwenden von
einem Klassifizierungsalgorithmus;
einem Matching-Algorithmus.

5. Die Vorrichtung nach einem der vorhergehenden Ansprüche, aufweisend:
Ein Modul zum Durchführen eines Paarens zwischen der Vorrichtung und dem Gerät basierend auf dem detektierten Typ oder Modell des Geräts.

6. Die Vorrichtung nach Anspruch 5, aufweisend:
Ein Modul zum Berichten des detektierten Typs oder Modells des Geräts an einen Server, um den Server in die Lage zu versetzen, zu detektieren, ob und/oder wie ein Paaren zwischen der Vorrichtung und dem Gerät durchgeführt werden kann;
Informieren der Vorrichtung durch den Server über das Ergebnis der Detektion, um dadurch ein Paaren zu initiieren.

7. Die Vorrichtung nach einem der vorhergehenden Ansprüche, aufweisend:
Ein Modul zum Detektieren einer Geste, basierend auf der erfassten magnetischen Feldstärke und/oder ihrem Muster.

8. Die Vorrichtung nach einem der vorhergehenden Ansprüche, aufweisend:
Ein Modul, um basierend auf dem detektierten Typ und/oder der Relativposition der Vorrichtung und des Geräts die Displays der Vorrichtung und des Geräts derart zu steuern, dass sie verwendet werden in Kombination so, dass jedes von ihnen einen Teil der anzuzeigenden Gesamtinformation durch eine Anwendung anzeigt.

9. Die Vorrichtung nach Anspruch 8, wobei die Verwendung in Kombination eines oder mehrere der Folgenden umfasst:
Erzeugen einer Panoramaansicht durch Kombinieren der zwei Displays;
Verwenden eines der Displays zum Anzeigen von Knöpfen und/oder anderen Eingabeinterfaces einer Anwendung und Verwendung des anderen Displays, um andere Informationen, die durch die Anwendung ausgegeben werden, anzuzeigen.

10. Die Vorrichtung nach einem der vorhergehenden Ansprüche, aufweisend:
Ein Modul zum Umschalten auf eine NFC-Funktionalität der Vorrichtung in Reaktion auf die Detektion des Typs oder Modells des Geräts, das in der Lage ist, mit der Vorrichtung zu kommunizieren.

11. Die Vorrichtung nach einem der vorhergehenden Ansprüche, wobei
das Gerät einen steuerbaren Magneten aufweist, der angepasst ist, eine definierte magnetische Feldstärke derart zu erzeugen, dass die Evaluierung der magnetischen Feldstärke verwendet werden kann für die Abschätzung, die durch das Verarbeitungsmodul der Vorrichtung durchgeführt wird.

12. Ein Verfahren zum Detektieren der Lokation und/oder einer oder mehreren Eigenschaften eines Geräts durch eine Vorrichtung, die ein Mobiltelefon oder ein Computer ist, wobei das Verfahren aufweist:
Erfassen und Speichern durch einen magnetischen Sensor der magnetischen Feldstärke und/oder ihres Musters, das durch das Gerät verursacht wird, das in die Nähe des magnetischen Sensors kommt;
Evaluieren der erfassten magnetischen Feldstärke oder des Musters basierend auf bekannten Feldstärken oder Mustern, um eine Abschätzung von einem oder mehreren der Folgenden zu erhalten:
Der Typ des Geräts;
die Orientierung des Geräts bezüglich des Mobiltelefons oder Computers;
Vergleichen der erfassten magnetischen Feldstärke und/oder ihres Musters mit vorher gespeichertem magnetischen Feldstärken und/oder ihren Mustern des Geräts.

13. Das Verfahren nach Anspruch 12, ferner aufweisend die Schritte wie ausgeführt durch die Module definiert in einem der Ansprüche 2 bis 11.

14. Ein Computerprogramm aufweisend Computerprogrammcode, der, wenn er auf einem Computer ausgeführt wird, den Computer in die Lage versetzt, ein Verfahren gemäß einem der Ansprüche 12 bis 13 auszuführen.

## Revendications

1. Appareil correspondant à un téléphone mobile ou à un ordinateur, comprenant :
un capteur magnétique configuré pour détecter et stocker l'intensité de champ magnétique et/ou le motif de champ magnétique provoqué(e) par un dispositif arrivant à proximité dudit capteur magnétique ;
un module de traitement configuré pour évaluer l'intensité ou le motif de champ magnétique détecté(e), sur la base d'intensités ou de motifs de champ connu(e)s, en vue d'obtenir une estimation de l'une ou plusieurs des données suivantes :
le type dudit dispositif ;
l'orientation dudit dispositif par rapport audit téléphone mobile ou ordinateur ;
dans lequel ledit module de traitement est configuré pour comparer ladite intensité de champ magnétique détectée et/ou ledit motif de champ magnétique détecté, avec les intensités de champ magnétique et/ou les motifs de champ magnétique précédemment stocké(e)s dudit dispositif.

2. Appareil selon la revendication 1, dans lequel ledit dispositif comporte l'un des éléments suivants :
un second téléphone mobile ou dispositif mobile ;
un ordinateur ;
un socle pour ledit appareil.

3. Appareil selon l'une quelconque des revendications précédentes, dans lequel lesdites intensités de champ ou lesdits motifs de champ connu(e)s sur la base desquelles/desquels ledit module de traitement est configuré pour mettre en oeuvre ladite évaluation correspondent à l'un(e) ou plusieurs des intensités ou motifs suivants :
les intensités de champ ou motifs de champ provoqué(e)s par un ou plusieurs haut-parleurs et/ou d'autres éléments ou modules quelconques dudit dispositif comportant un aimant permanent ;
les intensités de champ ou motifs de champ provoqué(e)s par les composants électroniques intégrés et/ou le flux de courant dudit dispositif;
lesdites intensités de champ ou lesdits motifs de champ étant caractéristiques du type et/ou de la position relative et/ou de l'orientation dudit dispositif par rapport audit dispositif mobile.

4. Appareil selon l'une quelconque des revendications précédentes, dans lequel ledit module de traitement est apte à utiliser, pour ladite comparaison, un ou plusieurs des algorithmes ci-dessous :
un algorithme de classification ;
un algorithme de mise en correspondance.

5. Appareil selon l'une quelconque des revendications précédentes, comprenant :
un module destiné à mettre en oeuvre un couplage entre ledit appareil et ledit dispositif sur la base du modèle ou du type détecté dudit dispositif.

6. Appareil selon la revendication 5, comprenant :
un module destiné à signaler le modèle ou le type détecté dudit dispositif, à un serveur, en vue de permettre audit serveur de détecter si et/ou comment un couplage entre ledit appareil et ledit dispositif peut être mis en oeuvre;
informer ledit appareil, par ledit serveur, du résultat de ladite détection, initiant ainsi un couplage.

7. Appareil selon l'une quelconque des revendications précédentes, comprenant :
un module destiné à détecter un geste sur la base de l'intensité de champ magnétique détectée et/ou du motif de champ magnétique détecté.

8. Appareil selon l'une quelconque des revendications précédentes, comprenant :
un module destiné à, sur la base du type détecté et/ou de la position relative dudit appareil et dudit dispositif, commander les écrans d'affichage dudit appareil et dudit dispositif, de sorte qu'ils sont utilisés conjointement, de manière à ce que chacun d'eux affiche une partie de l'ensemble des informations devant être affichées par une application.

9. Appareil selon la revendication 8, dans lequel ladite utilisation conjointe comporte une ou plusieurs des étapes suivantes consistant à :
générer une vue panoramique en combinant lesdits deux écrans d'affichage ;
utiliser l'un desdits écrans d'affichage en vue d'afficher des boutons et/ou d'autres interfaces de saisie d'une application, et utiliser l'autre écran d'affichage en vue d'afficher d'autres informations générées en sortie par ladite application.

10. Appareil selon l'une quelconque des revendications précédentes, comprenant :
un module destiné à commuter une fonctionnalité NFC dudit appareil en réponse à la détection du type ou du modèle dudit dispositif apte à communiquer avec ledit appareil.

11. Appareil selon l'une quelconque des revendications précédentes, dans lequel :
ledit dispositif comporte un aimant contrôlable configuré pour générer un motif de champ magnétique défini, de sorte que l'évaluation dudit motif de champ magnétique peut être utilisée pour l'estimation mise en oeuvre par le module de traitement dudit appareil.

12. Procédé de détection, par un appareil correspondant à un téléphone mobile ou à un ordinateur, de l'emplacement et/ou d'une ou plusieurs propriétés de dispositif, ledit procédé comprenant les étapes consistant à :
détecter et stocker, par le biais d'un capteur magnétique, l'intensité de champ magnétique ou et/ou le motif de champ magnétique, provoqué(e) par ledit dispositif arrivant à proximité dudit capteur magnétique ;
évaluer l'intensité de champ magnétique ou le motif de champ magnétique détecté(e), sur la base d'intensités de champ ou de motifs de champ connu(e)s, en vue d'obtenir une estimation de l'une ou plusieurs des données suivantes :
le type dudit dispositif;
l'orientation dudit dispositif par rapport audit téléphone mobile ou ordinateur ;
comparer ladite intensité de champ magnétique détectée et/ou le motif de champ magnétique détecté, avec des intensités de champ magnétique et/ou des motifs de champ magnétique précédemment stocké(e)s du dispositif.

13. Procédé selon la revendication 12, comprenant en outre les étapes telles que mises en oeuvre par les modules selon l'une quelconque des revendications 2 à 11.

14. Programme informatique comprenant un code de programme informatique qui, lorsqu'il est exécuté sur un ordinateur, permet audit ordinateur de mettre en oeuvre un procédé selon l'une quelconque des revendications 12 à 13.
